# EUROPEAN PATENT APPLICATION

(11) **EP 4 535 612 A1**
(43) Date of publication of application: **09.04.2025**
(21) Application number: 23815998.2
(22) Date of filing: 29.05.2023
(51) Int. Cl.: H02J 50/40, B60L 5/00, B60L 15/20, B60L 53/122, B60M 7/00, H02J 7/00, H02J 50/12

(54) **POWER TRANSMISSION DEVICE**

(30) Priority: 01.06.2022 JP 2022089578
(71) Applicant: DENSO CORPORATION, Kariya-city, Aichi 448-8661 (JP)
(72) Inventor: OBAYASHI, Kazuyoshi, Kariya-city, Aichi 448-8661 (JP); TANI, Keisuke, Kariya-city, Aichi 448-8661 (JP); YAMAGUCHI, Nobuhisa, Kariya-city, Aichi 448-8661 (JP)
(74) Representative: TBK
(86) International application number: PCT/JP2023/019871
(87) International publication number: WO 2023/234241

(57) **Abstract**

A power transmission device (2) used in an in-motion power supply system (1) that supplies power to a vehicle (10) in motion in a wireless manner, the power transmission device being disposed on a road (4) based on a guide line (51), which is a line used when a travel route is set using an HD map in a travel route setting section (111), and is provided with a power transmission coil (21) that supplies power to a power reception coil (35) of the vehicle in a wireless manner, and a power transmission circuit (24) that supplies power to the power transmission coil.

## Description

### [Cross-Reference to Related Applications]

This application is based on and claims the benefit of priority from earlier Japanese Patent Application No. 2022-089578 filed on June 1, 2022, the contents of which are hereby incorporated by reference.

### [Technical Field]

The present disclosure relates to a power transmission device in an in-motion power supply system.

### [Background Art]

In recent years, electric vehicles have become increasingly popular. Electric vehicles travel by driving a motor using electricity stored in the on-board battery to rotate the wheels. For vehicles powered by such electrical energy, an in-motion power supply system has been developed to provide power in a wireless manner using a technology called DWPT (Dynamic Wireless Power Transfer: Dynamic Wireless Charging). In this in-motion power supply system, power is transmitted wirelessly from power transmission coils embedded on the ground side to a power reception coil mounted under a floor of a vehicle.

On the other hand, Patent Literature 1 describes a map data generating device that provides a dynamic map by mapping dynamic information provided by other vehicles or roadside units to static information in an autonomous driving support system. Generally, in autonomous driving systems (ADS), vehicle travel control is performed by determining a travel route based on lane links (lane centerlines) in high-precision three-dimensional map data (HD map: High-Definition Map).

### [Citation List]

### [Patent Literature]

[PTL 1] JP 2020-30362 A.

### [Summary of the Invention]

In the conventional technology described above, for example, when a vehicle travels along a travel route set by an autonomous driving system, if the vehicle continues to travel with the power reception coil on the vehicle side not facing the power transmission coils on the road side and misaligned with each other, a problem has arisen where charging cannot be performed. It should be noted that in the above-mentioned in-motion power supply system, the power transmission coils are embedded underground and cannot be easily relocated. The present disclosure has been made in light of the problems set forth above and has as its object to provide a power transmission device that can sufficiently supply power when a vehicle with a power reception coil travels along a set travel route.

The present disclosure can be realized as the following aspects.

According to an aspect of the present disclosure, a power transmission device is provided.

The power transmission device is used in an in-motion power supply system that supplies power to a vehicle in motion in a wireless manner, the power transmission device includes a power transmission coil that is disposed on a road based on a guide line, which is a line used when a travel route is set using an HD map in a travel route setting section, and that supplies power to a power reception coil of the vehicle in a wireless manner, and a power transmission circuit that supplies power to the power transmission coil.

According to the above configuration, the power transmission coils provided by the power transmission device are disposed on the road with respect to the guide lines, which are the lines used when the driving route is set using the HD map. Therefore, when the vehicle travels along the travel route set by the guide lines, the power transmission coils of the power transmission device and the power reception coil on the vehicle side tend to face each other. As a result, when the vehicle travels along the set travel route, the state in which the power transmission coils and the power reception coil are facing each other is maintained for a certain period of time, enabling stable power supply.

### [Brief Description of the Drawings]

The above features of the present disclosure will be made clearer by the following detailed description, given referring to the appended drawings. In the accompanying drawings:
Fig. 1 shows a block diagram of a schematic configuration of an in-motion power supply system according to a first embodiment of the present disclosure;
Fig. 2 shows a block diagram of a schematic configuration of a vehicle control unit according to the first embodiment of the present disclosure;
Fig. 3 shows a plan view of a schematic embedment pattern of power transmission coils in a power transmission device according to the first embodiment;
Fig. 4 shows a plan view of a schematic embedment pattern of power transmission coils in a power transmission device according to a second embodiment;
Fig. 5 shows a plan view of a schematic embedment pattern of power transmission coils in a power transmission device according to a third embodiment;
Fig. 6 shows a plan view of a schematic embedment pattern of power transmission coils in a power transmission device according to a fourth embodiment; and
FIig. 7 shows a schematic diagram for explaining a connection configuration between inverters and power transmitting coils in a power transmitting device according to a fifth embodiment.

### [Description of Embodiments]

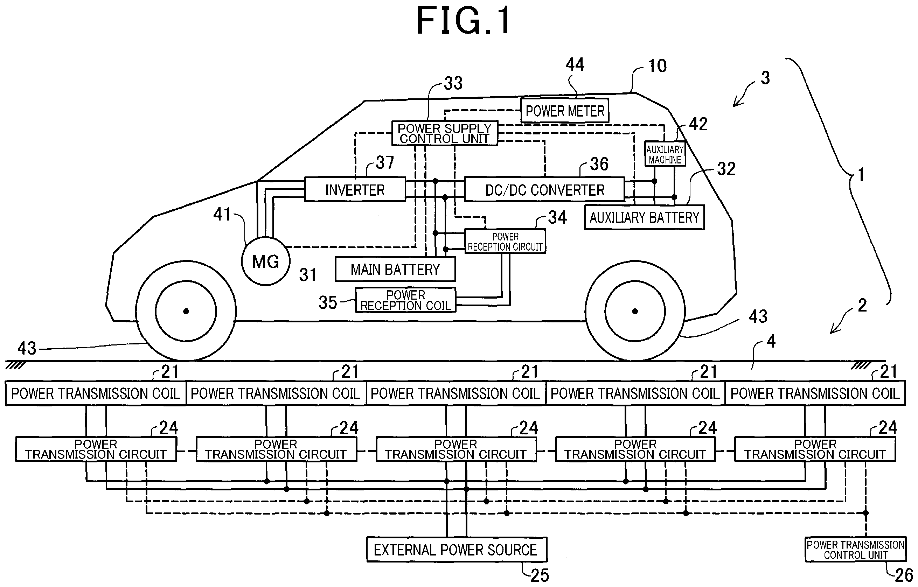

A plurality of embodiments of the present disclosure will be described below based on Figs. 1 through 7.

### A. First Embodiment:

### A1. Configuration of an in-motion power supply system 1:

As shown in Fig. 1, an in-motion power supply system includes a power transmission device 2 on a road 4 and a power receiving device 3 on a vehicle 10 side. The in-motion power supply system 1 is a system that can wirelessly supplies power from a power transmission device 2 to the vehicle 10 while the vehicle 10 is traveling. The vehicle 10 is configured, for example, as an electric or hybrid vehicle.

The power transmission device 2 on the road 4 side has a plurality of power transmission coils 21, a plurality of power transmission circuits 24 that apply AC voltage to each of the plurality of power transmission coils 21 to supply power, an external power source 25 (hereinafter referred to as a power supply 25) that supplies power to the plurality of power transmission circuits 24 and a power transmission control unit 26.

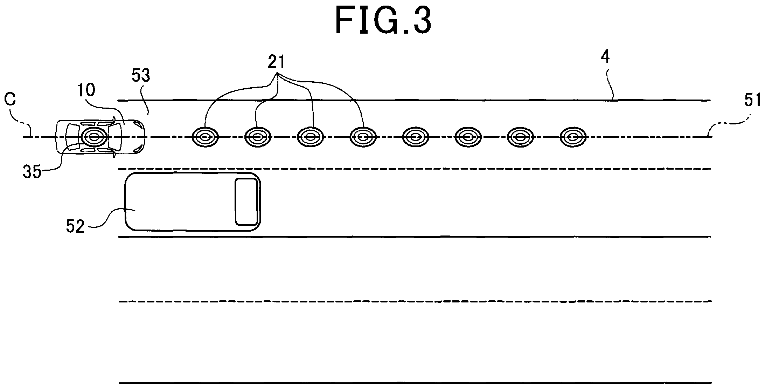

The plurality of power transmission coils 21 are installed in line along the direction of the road 4. The power transmission coils 21 are divided into multiple sectors. Note that a more specific embedment pattern of the power transmission coils 21 in the road 4 is described below with reference to Fig. 3. The power transmission circuit 24 converts the DC voltage supplied from the power supply 25 into a high-frequency AC voltage and applies it to the power transmission coil 21, and includes an inverter circuit, a filter circuit, and a resonance circuit. In the present embodiment, the inverter circuit, the filter circuit, and the resonance circuit are well known, so the description thereof will be omitted.

The power supply 25 is a circuit that supplies DC voltage to the power transmission circuit 24. or example, the power supply 25 supplies a voltage from a power grid to the power transmission circuit 24 via a power factor correction circuit (PFC). It should be noted that the power supply 25 may receive power from the power grid, distribute the voltage-converted 50/60 Hz AC to each power transmission circuit, and perform PFC and AC-DC conversion in each power transmission circuit. The PFC is not shown in the drawing. The DC voltage output by the power supply 25 does not have to be a perfect DC voltage and may include some degree of fluctuation (ripple). The power transmission control unit 26 causes the power transmission circuit 24 and the power transmission coil 21 to perform power transmission.

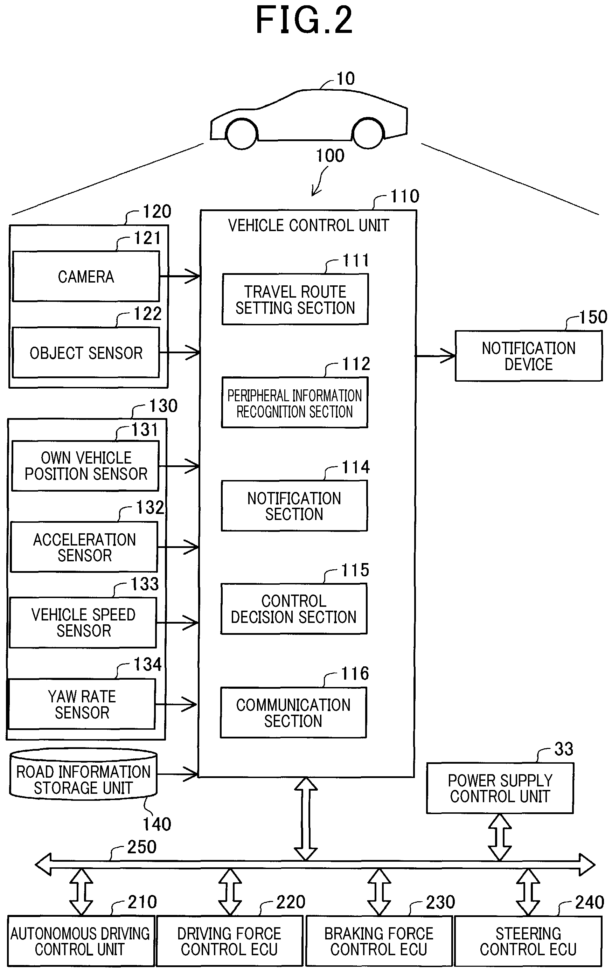

The vehicle 10 is equipped with a main battery 31, an auxiliary battery 32, a power supply control unit 33, a power reception circuit 34, a power reception coil 35, a DC/DC converter circuit 36, an inverter circuit 37, a motor generator 41, an auxiliary machine 42, tires 43, and a power meter 44. The vehicle 10 is also equipped with an autonomous driving control system 100 (refer to Fig. 2) that mainly relates to autonomous driving control, and the configuration of them will be described later using Fig. 2.

The power reception coil 35 is connected to the power reception circuit 34, and at the output of the power reception circuit 34, the main battery 31, the high voltage side of the DC/DC converter circuit 36, and the inverter circuit 37 are connected. The low voltage side of the DC/DC converter circuit 36 is connected to the auxiliary battery 32 and the auxiliary machine 42. The motor generator 41 is connected to the inverter circuit 37. In the first embodiment, the receiving coil 35 is located near the center of the vehicle 10 in the width and length directions. The receiving coil 35 receives the supplied power from the power transmission coil 21.

The power reception circuit 34 includes a rectifier circuit that converts the AC voltage output from the receiving coil 35 to DC voltage. Note that the power reception circuit 34 may include a DC/DC converter circuit that converts the DC voltage generated by the rectifier circuit to a voltage suitable for charging the main battery 31. The DC voltage output from the power reception circuit 34 can be used to charge the main battery 31 and drive the motor generator 41 through the inverter circuit 37. In addition, the DC/DC converter circuit 36 can also be used to step down the voltage to charge the auxiliary battery 32 and drive auxiliary machine 42.

The main battery 31 is a secondary battery that outputs a relatively high DC voltage to drive the motor generator 41. The motor generator 41 operates as a 3-phase AC motor and generates driving force for driving the vehicle 10. The motor generator 41 operates as a generator during deceleration of the vehicle 10 and generates 3-phase AC voltage. The inverter circuit 37 converts the DC voltage of the main battery 31 to 3-phase AC voltage and supplies it to the motor generator 41 when the motor generator 41 operates as a motor. The inverter circuit 37 converts the 3-phase AC voltage output by the motor generator 41 to DC voltage and supplies it to the main battery 31 when the motor generator 41 operates as a generator.

The DC/DC converter circuit 36 converts the DC voltage of the main battery 31 into a DC voltage suitable for driving the auxiliary machine 42 and supplies it to the auxiliary battery 32 and the auxiliary machine 42. The auxiliary battery 32 is a secondary battery that outputs DC voltage to drive the auxiliary machine 42. The 42 auxiliary machine includes an air conditioning system, an electric power steering system, peripheral equipment such as headlights, blinkers, wipers of the vehicle 10, and various accessories of the vehicle 10. The DC/DC converter circuit 36 can be eliminated.

The power meter 44 meters the amount of power supplied by the power reception coil 35. The amount of power metered by the power meter 44 is stored in a memory section not shown. Further, the amount of power metered by the power meter 44 may be displayed, for example, on a monitor screen installed in the vehicle (a notification device 150 described below with reference to Fig. 2). The power supply control unit 33 controls the power reception circuit 34 to receive power when receiving a wireless power supply while traveling.

### A2. Configuration of an autonomous driving control system 100:

As shown in Fig. 2, the vehicle 10 is equipped with an autonomous driving control system 100. The vehicle 10 can be driven autonomously and manually. In autonomous driving, the vehicle 10 is automatically steered and driven even if a steering wheel for operating the vehicle 10 is not operated by a driver. In addition, in some forms of autonomous driving, steering is performed by the driver and acceleration and deceleration are automatically controlled. In manual driving, the steering wheel, an accelerator (gas) pedal, and a brake pedal are operated by the driver to steer and accelerate/decelerate the vehicle 10.

In the present embodiment, the autonomous driving control system 100 has a vehicle control unit 110, peripheral sensors 120, internal sensors 130, a road information storage unit 140, an autonomous driving control unit 210, a driving force control ECU (Electronic Control Unit) 220, a braking force control ECU 230, and a steering control ECU 240. The vehicle control unit 110, the autonomous driving control unit 210, the driving force control ECU 220, the braking force control ECU 230, the steering control ECU 240, and the power supply control unit 33 described above are connected via an in-vehicle network 250.

The peripheral sensors 120 acquire information on the surroundings outside the vehicle necessary for autonomous driving. The peripheral sensor 120 has a camera 121 and an object sensor 122. The camera 121 captures images of the surroundings of the vehicle 10 and acquires images. The object sensor 122 detects the situation around the vehicle 10. The object sensor 122 includes, for example, laser radar, millimeter wave radar, ultrasonic sensors, and other object sensors that use reflected waves.

The internal sensor 130 has an own vehicle position sensor 131, an acceleration sensor 132, a vehicle speed sensor 133, and a yaw rate sensor 134. The own vehicle position sensor 131 detects the current position of the vehicle 10. Examples of own vehicle position sensors 131 include global navigation satellite system(s) (GNSS) and gyro sensors.

The acceleration sensor 132 is a detector that detects the acceleration of the vehicle 10. The acceleration sensor 132 includes, for example, a longitudinal acceleration sensor that detects longitudinal acceleration in the front-back direction of the vehicle 10 and a lateral acceleration sensor that detects lateral acceleration of the vehicle 10. The vehicle speed sensor 133 measures the current travel speed of the vehicle 10. The yaw rate sensor 134 is a detector that detects the yaw rate (angular rate of rotation) around the vertical axis of the center of gravity of the vehicle 10. For example, a gyro sensor can be used as the yaw rate sensor 134. The peripheral sensors 120 and internal sensors 130 transmit various acquired data to the vehicle control unit 110.

The road information storage unit 140 stores detailed road information and other information about the road on which the vehicle 10 is scheduled to travel. Road information is static information contained in HD maps (High-Definition Map: high-precision three-dimensional map data). For example, road information includes the number of lanes, lane widths, center coordinates of each lane, stop line locations, traffic signal locations, guardrail locations, road grades, road types of curves and straight sections, curve radii, and length of curve sections. Note that this road information, etc., is updated via the wide-area network to the latest information as appropriate.

The notification device 150 is a device that informs the occupants (mainly the driver) of the vehicle 10 of various information using images and sounds. The notification device 150 includes a display unit and a speaker. For example, a HUD (Head-Up Display) or a display device on an instrument panel can be used as a display device. Note that images also include video and text strings.

The vehicle control unit 110 includes a travel route setting section 111, a peripheral information recognition section 112, a notification section 114, a control decision section 115, and a communication section 116. The vehicle control unit 110 consists of a central processing unit (CPU) and a microcomputer composed of RAM and ROM, etc., and the microcomputer executes a pre-installed program to realize the functions of these various parts. However, some or all of the functions of each of these parts may be realized by hardware circuits.

The travel route setting section 111 sets the route to be traveled by the vehicle 10. More specifically, the travel route setting section 111 sets a target travel route to a predetermined destination using road information stored in the road information storage unit 140. The target driving route in the present embodiment is not just a simple route to the destination, but a detailed route including driving lanes and a driving position in the road. The travel route setting section 111 corresponds to a travel route setting section.

The peripheral information recognition section 112 recognizes the peripheral information of the vehicle 10 using the detection signals of the peripheral sensors 120. More specifically, the peripheral information recognition section 112 recognizes, based on the images captured by the camera 121 and the output signal of the object sensor 122, the existence and position of left and right demarcation lines (hereinafter referred to as lane markers) on the road on which the vehicle is traveling; the existence of traffic signals and their positions and instructions; the existence, position, size and distance of other vehicles; the existence, position, size, distance, direction of travel; the existence of the driver of the other vehicle and his/her behavior; the presence and position of people in the vicinity of the other vehicle, etc. are recognized as peripheral information. Note that the peripheral information recognition section 112 may acquire and recognize some or all of information through wireless communication with traffic signals, external servers, etc.

The notification section 114 informs the occupants of various information, such as travel routes and vehicle position information, using the above-mentioned notification devices 150 capable of image display and audio output. The notification section 114, for example, notifies information about a hands-on request according to the process of the control decision section 115 according to the driving conditions of the vehicle 10. A hands-on request is a request to switch from the hands-off state, in which the driver does not hold the steering wheel, to the hands-on state, in which the driver holds the steering wheel during autonomous driving. In addition, the notification section 114 also notifies information on the current amount of power according to the process of the control decision section 115 according to the driving conditions of the vehicle 10.

The control decision section 115 determines the control details of the vehicle 10 and outputs the control of the vehicle 10 to the autonomous driving control unit 210 through the in-vehicle network 250. The communication section 116, for example, obtains traffic information, weather information, accident information, obstacle information, traffic regulation information, etc. from an information center not shown in the drawings through an antenna not shown in the drawings. The communication section 116 may acquire various types of information from other vehicles through inter-vehicle communication. In addition, the communication section 116 may also acquire various types of information from roadside units at various locations on the road through roadside-to-vehicle communication.

The autonomous driving control unit 210 consists of a central processing unit (CPU) and a microcomputer composed of RAM and ROM, etc., and the microcomputer executes a pre-installed program to realize autonomous driving functions. The autonomous driving control unit 210, for example, controls the driving force control ECU 220, the braking force control ECU 230 and the steering control ECU 240 so that the vehicle travels along the travel route set by the travel route setting section 111. The autonomous driving control unit 210 may, for example, provide merging assistance when the vehicle 10 is changing lanes into an adjacent lane, so that the vehicle 10 travels from a reference line of the lane in which the vehicle 10 is traveling to a reference line of the adjacent lane.

The driving force control ECU 220 is an electronic controller that controls actuators that generate a driving force of the vehicle 10, such as an engine. When the driver drives the vehicle 10 manually, the driving force control ECU 220 controls a power source, which is the engine or an electric motor, according to the amount of operation of the accelerator pedal. On the other hand, in a case of autonomous driving, the driving force control ECU 220 controls the power source according to a required driving force calculated by the autonomous driving control unit 210.

The braking force control ECU 230 is an electronic controller that controls brake actuators that generate a braking force of the vehicle 10. When the driver drives the vehicle 10 manually, the brake force control ECU 230 controls the brake actuators according to the amount of brake pedal operation. On the other hand, in the case of autonomous driving, the brake force control ECU 230 controls the brake actuators according to a required braking force calculated by the autonomous driving control unit 210.

The steering control ECU 240 is an electronic controller that controls a motor that generates a steering torque for the vehicle 10. When the driver drives the vehicle 10 manually, the steering control ECU 240 controls the motor to generate assist torque for steering operation in response to steering wheel operation. This allows the driver to operate the steering wheel with a small amount of force, thereby achieving steering of the vehicle 10. On the other hand, in the case of autonomous driving, the steering control ECU 240 performs steering by controlling the motor according to a required steering angle calculated by the autonomous driving control unit 210.

In autonomous driving, the driving route setting section 111 creates a driving plan for the vehicle 10 based on road information stored in the road information storage unit 140, the current position detected by the own vehicle position sensor 131, and the position, speed, etc. of other vehicles, etc. around the vehicle 10. This driving plan includes a steering plan and acceleration/deceleration plan for the vehicle 10 up to a few seconds later.

Basically, the travel route is set up using lane links so that the vehicle 10 travels in the center of the travel lane. In other words, as shown in Fig. 3, the travel route is set so that the centerline C in the width direction of the vehicle 10 is located on the lane link 51 (= lane centerline).

### A3. Detail of the embedded positions of the power transmission coils 21:

Next, the embedded positions in the road of the power transmission coils 21 of the power transmission device 2 of the in-motion power supply system 1 described in detail above will be explained. The power transmission coils 21 are embedded in the road with respect to the guide line, which are static information contained in the HD map and are the lines used when the travel route is set using the HD map in the travel route setting section 111. In the first embodiment, the guide wire is the lane link 51 and the power transmission coils 21 are embedded in positions coincident with the lane link 51. The power transmission coils 21 installed on the lane links 51 are hereinafter also referred to as the power transmission coils 21 for central supplying.

It should be noted that the term embedded in the road with reference to the guide line includes not only a form in which the power transmission coils 21 are embedded so that they coincide with the lane link 51, which corresponds to an example of a guide line, as in the first embodiment, but also a form in which the power transmission coils 21 are embedded at a predetermined distance in the lane width direction from the lane link 51 with the lane link 51 as a reference line, as in the second embodiment described later. In the first embodiment, the receiving coil 35 is located near the center of the vehicle 10, so that the power transmission coils 21 and the receiving coil 35 face each other when the centerline C in the width direction of the vehicle 10 coincides with the lane link 51.

Since general vehicles often slow down or stop in the section (several tens of meters) before an intersection with a traffic light, it is recommended that the power transmission coils 21 be actively installed in such a section. In addition, the latest information of the section where the power transmission coils 21 are embedded is updated as appropriate, and stored, for example, in the road information storage unit 140.

In the first embodiment, the power transmission coils 21 provided by the transmission device 2 is installed on the road to coincide with the lane link 51 as a guide line, which is the line used when the driving route is set using the HD map. Therefore, the power transmission coils 21 of the power transmission device 2 and the receiving coil 35 on the vehicle 10 side tend to face each other when the vehicle travels along the travel route set using guide line. As a result, the state in which the power transmission coils 21 and the receiving coil 35 face each other is maintained for a certain period of time, enabling stable power supply. In addition, in autonomous driving, the vehicle is generally controlled to drive in the center of the lane 53 during normal operation, so the battery can be reliably charged while driving on the set driving route. Further, in manual driving, the driver usually tries to drive in the center of the lane 53, which allows for stable charging.

### B. Second Embodiment:

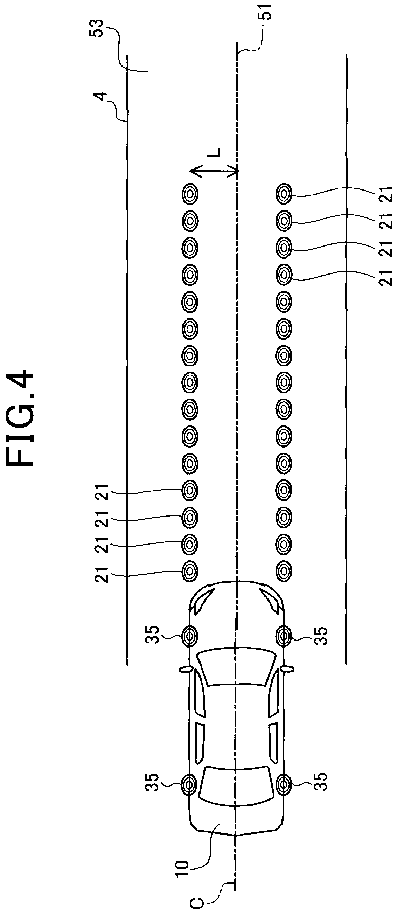

Next, the second embodiment is explained with reference to Fig. 4. It should be noted that in the second embodiment and each of the embodiments described below, the overall configuration of the power supply system 1 (Fig. 1) and the vehicle control unit 110 (Fig. 2) are similar to those of the first embodiment, so the same reference numbers are used for substantially identical parts and explanations are omitted.

As shown in Fig. 4, the second embodiment differs from the first embodiment in that the power reception coils 35 are not located near the center of the vehicle 10, but are located inside or near the tires 43 and around the lower side of a suspension system that the vehicle 10 is equipped with. Furthermore, in the second embodiment of the power transmission device 2, the power transmission coils 21 are embedded at positions spaced from the lane link 51 by a predetermined distance L in both width directions of the road so that they are two lines parallel to each other in plan view. The distance between the two lines of the power transmission coils 21 is identical to the distance between the disposition of the receiving coils 35 in the width direction of the vehicle 10. In other words, the power transmission coils 21 and the receiving coils 35 face each other when the vehicle 10 travels with the centerline C in the width direction of the vehicle 10 coinciding with the lane link 51. Note that the power transmission coils 21 that are installed at a predetermined distance from the lane links 51 are hereinafter also referred to as the power transmission coils 21 for tire supplying.

According to the second embodiment, the same effects as the first embodiment can be achieved.

### C. Third Embodiment:

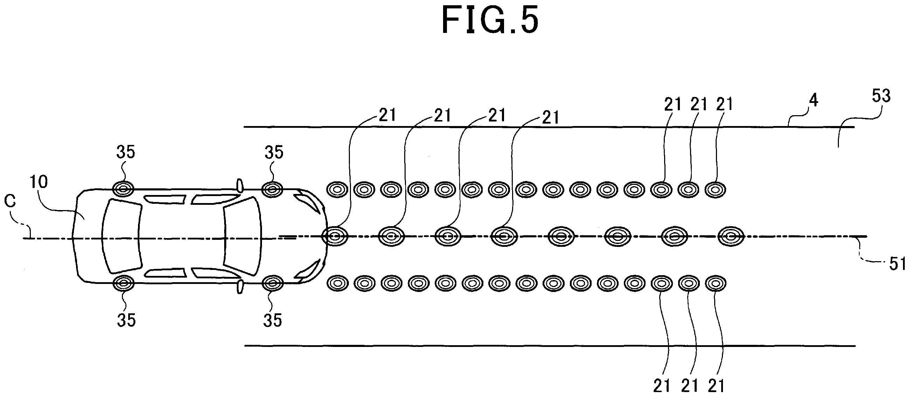

Next, the third embodiment is explained with reference to Fig. 5. As shown in Fig. 5, the third embodiment differs from the second embodiment in that the power transmission coils 21 are also embedded on the lane link 51. In other words, the third embodiment of the power transmission device 2 has the power transmission coils 21 for central supplying and transmission coils for tire supplying 21. The embedment pattern of the power transmission coils 21 for central supplying on the lane link 51 is the same as in the first embodiment.

According to the third embodiment, the same effects as the first embodiment can be achieved. Further, since the power reception coil 35 can be installed in either near the center or near the tire 43, the power transmission device 2 can be implemented as a power r transmission device that can supply power more reliably to various types of vehicles 10. Note that although the vehicle 10 of the second embodiment is represented in Fig, 5, power can also be supplied when the vehicle 10 of the first embodiment is traveling.

### D. Fourth Embodiment:

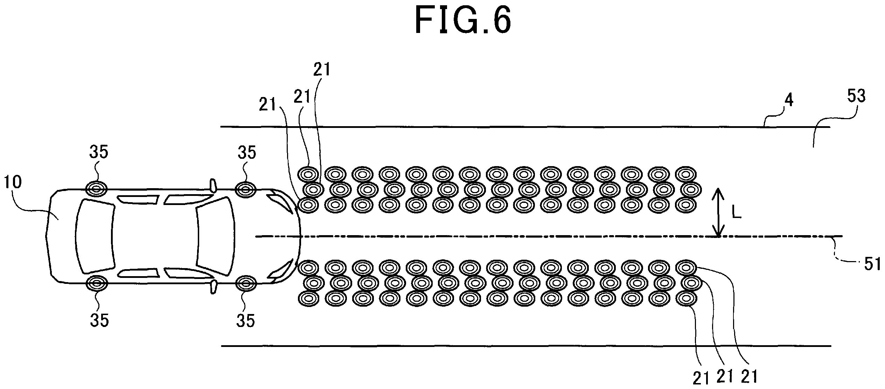

Next, the fourth embodiment is explained with reference to Fig. 6. As shown in Fig. 6, the fourth embodiment differs from the second embodiment in that the power transmission coils 21 are provided in a plurality of lines in the width direction of the lane 53. Fig. 6 shows an example of three receiving coils 35 side-by-side in the width direction, centered at a position separated from the lane link 51 by a predetermined distance L in both width directions of the road 4.

According to the fourth embodiment, the same effects as the second embodiment can be achieved. Further, even if the traveling line of the vehicle 10 is displaced in the width direction within the lane 53, a large area for transmitting power can be secured in the power transmission device 2, making it easier for the receiving coil 35 to face the transmitting coils 21, thereby enabling power to be supplied appropriately. Furthermore, it is possible to supply power to vehicles 10 with different vehicle widths, i.e., different spacing between the left and right tires 43.

### E. Fifth Embodiment:

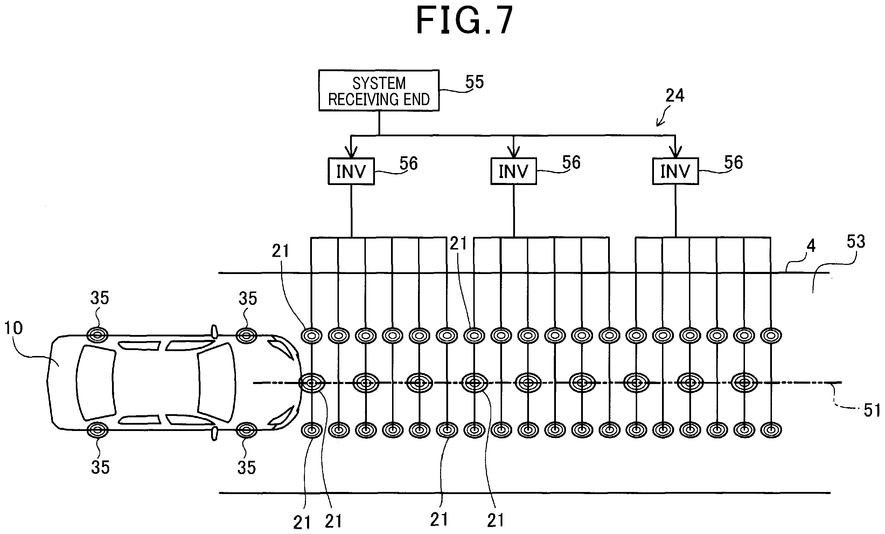

Next, the fifth embodiment is explained with reference to Fig. 7. As shown in Fig. 7, in the fifth embodiment, the disposition configuration of the transmitting coils 21 and the receiving coils 35 is the same as in the third embodiment. In a power transmission circuit 24 of the fifth embodiment of the power transmission device 2, a plurality of inverters 56 are disposed between the connection path from a system receiving end 55, which is composed of a distribution board or the like, to the power transmission coils 21. The inverter 56 converts the DC voltage supplied from the system receiving end 55 into a high-frequency AC voltage.

The inverter 56 is connected to several types of power transmission coils 21 (two types in the present embodiment), including the power transmission coils 21 for central supplying and the power transmission coils 21 for tire supplying, each of which has a different size. Then, power can be transmitted to multiple types of power transmission coils 21 from a single inverter 56. Depending on the location of the receiving coil 35 in the vehicle 10, the power is supplied sequentially from the power transmission coils 21 to the receiving coil 35, which is the target of the power supply. Note that the example shown in Fig. 7 shows an example in which a single inverter 56 transmits power to a plurality of power transmission coils 21 that are located within an area about one vehicle 10 in length. However, the number of power transmission coils 21 connected to a single inverter 56 and the area of disposition can be modified according to the amount of power that can be supplied at one time.

According to the fifth embodiment, the same effects as the first embodiment can be achieved. Further, a simple system configuration can be achieved by supplying power from a single inverter 56 to a plurality of transmission coils 21. In other words, for example, if separate inverters are disposed for the power transmission coils 21 for the central suppling and the power transmission coils 21 for the tire supplying, the inverters when not in use will be wasted, and the inverters will require a large disposition space. In this regard, according to the fifth embodiment, the disposition location of the inverter 56 can be kept compact and the system configuration can be simplified.

### F. Other Embodiments:

(F1) In each of the above embodiments, the vehicle 10 may not be equipped with the autonomous driving control system 100. In this configuration, it may simply use the road information stored in the road information storage unit 140 to set the route to the destination by the travel route setting section 111. Further, the driver may also drive manually along the route using a navigation application with a portable device such as a smartphone without having the travel route setting section 111. In such a configuration, the portable device may display a line corresponding to the location of the power transmission coils 21, i.e., the lane link.

(F2) In the fifth embodiment, the disposition configuration of the power transmission coils 21 and receiving coils 35 is the same as in the third embodiment, however, it may be the configuration in the first, second, and fourth embodiments, or even a different configuration. In addition, the power may be transmitted from a single inverter 56 for three or more different types of power transmission coils 21.

(F3) Although an example is shown where the guide line is the lane link 51 in each of the above embodiments, the guide line is not limited to the lane link 51. As another example of a guide line, if vehicle 10 is a route bus, the guide line may be a lane line along a bus-only lane that detours from the general traffic lane to a bus stop, such as a line approaching the sidewalk a predetermined distance from the center line of the bus-only lane. In this case, the travel route setting section 111 sets the travel route so that the bus travels along the lane lines. The power transmission coils 21 embedded along the lane lines allow the bus to approach the sidewalk as it travels at low speed near the front of the bus stop, making it easier for passengers to get on and off the bus at the bus stop and charging more efficiently.

(F4) Further, the guide line may be a curve connecting a lane link in the currently traveled lane and a lane link in the traveled lane to which the right turn is to be made, such as at a right turn in an intersection with two lanes in each direction or a right turn lane. In this case, embedding the power transmission coils 21 at this curve location would increase the opportunity for charging when pausing to wait for a right turn.

The present disclosure is not limited to the above-mentioned embodiments, but can be realized in various configurations to the extent that the intent is not departed from. For example, the technical features in each embodiment corresponding to the technical features in the forms described in the Summary of the Invention section can be replaced or combined as appropriate to solve some or all of the above issues or to achieve some or all of the above effects. In addition, if the technical feature is not described as essential in the specification, it can be deleted as appropriate.

### (Configuration 1)

A power transmission device used in an in-motion power supply system (1) that supplies power to a vehicle (10) in motion in a wireless manner, the power transmission device includes:
a power transmission coil (21) that is disposed on a road based on a guide line (51), which is a line used when a travel route is set using an HD map in a travel route setting section (111), and that supplies power to a power reception coil (35) of the vehicle in a wireless manner, and
a power transmission circuit (24) that supplies power to the power transmission coil.

### (Configuration 2)

The power transmission device according to configuration 1, wherein
the guide line is a lane link as static information contained in the HD map.

### (Configuration 3)

The power transmission device according to configuration 2, wherein
a plurality of the power transmission coils are disposed along the road in the lane link.

### (Configuration 4)

The power transmission device according to configuration 2, wherein
a plurality of the power transmission coils are disposed along the road at a predetermined distance in a width direction of a lane from the lane link.

### (Configuration 5)

The power transmission device according to any one of configurations 1 to 4, wherein
a plurality of the power transmission coils are disposed side by side in a width direction of a lane.

### (Configuration 6)

The power transmission device according to any one of configurations 1 to 4, wherein
the power transmission device is further equipped with an inverter (56), and
supplying power from the single inverter to a plurality of the power transmission coils.

### (Configuration 7)

The power transmission device according to configuration 6, wherein
the single inverter supplies power to a plurality of the power transmission coils of different types.

### (Configuration 8)

The power transmission device according to any one of configurations 1 to 4, wherein
the vehicle can be driven autonomously and manually along the travel route set by the travel route setting section, and
the power transmission device is capable of supplying power to the vehicles capable of autonomous and manual driving.

## Claims

1. A power transmission device used in an in-motion power supply system (1) that supplies power to a vehicle (10) in motion in a wireless manner, the power transmission device comprising:
a power transmission coil (21) that is disposed on a road based on a guide line (51), which is a line used when a travel route is set using an HD map in a travel route setting section (111), and that supplies power to a power reception coil (35) of the vehicle in a wireless manner, and
a power transmission circuit (24) that supplies power to the power transmission coil.

2. The power transmission device according to claim 1, wherein
the guide line is a lane link as static information contained in the HD map.

3. The power transmission device according to claim 2, wherein
a plurality of the power transmission coils are disposed along the road in the lane link.

4. The power transmission device according to claim 2, wherein
a plurality of the power transmission coils are disposed along the road at a predetermined distance in a width direction of a lane from the lane link.

5. The power transmission device according to any one of claims 1 to 4, wherein
a plurality of the power transmission coils are disposed side by side in a width direction of a lane.

6. The power transmission device according to any one of claims 1 to 4, wherein
the power transmission device is further equipped with an inverter (56), and
supplying power from the single inverter to a plurality of the power transmission coils.

7. The power transmission device according to claim 6, wherein
the single inverter supplies power to a plurality of the power transmission coils of different types.

8. The power transmission device according to any one of claims 1 to 4, wherein
the vehicle can be driven autonomously and manually along the travel route set by the travel route setting section, and
the power transmission device is capable of supplying power to the vehicles capable of autonomous and manual driving.
